# EUROPEAN PATENT APPLICATION

(11) **EP 2 398 070 A2**
(43) Date of publication of application: **21.12.2011**
(21) Application number: 11169120.0
(22) Date of filing: 08.06.2011
(51) Int. Cl.: H01L 31/058

(54) **A hybrid photovoltaic system and method thereof**

(30) Priority: 18.06.2010 US 818384
(71) Applicant: General Electric Company, Schenectady, NY 12345 (US)
(72) Inventor: Chatterjee, Aveek, Niskayuna, NY New York 12309 (US); Mayer, Oliver Gerhard, Niskayuna, NY New York 12309 (US); Stromberger, Joerg Hermann, Niskayuna, NY New York 12309 (US); Belloni, Clarissa Sara Katharina, Oxford, Oxfordshire OX1 3UH (GB)
(74) Representative: Bedford, Grant Richard

(57) **Abstract**

A hybrid system (10) includes a photovoltaic system (12) configured to receive solar energy and convert the solar energy into electrical energy. A cooling system (18) is coupled to the photovoltaic system (12) and configured to circulate a cooling fluid through the cooling system (18) so as to remove heat from the photovoltaic system (12) to cool the photovoltaic system (12). A first device (20) is coupled to the cooling system (18) via a temperature booster (22) and configured to receive the heated cooling fluid from the cooling system (18). The temperature booster (22) is configured to substantially increase the temperature of the heated cooling fluid fed from the cooling system (18) to the first device (20) from a first temperature to a second temperature. The first device (20) includes a waste heat recovery system (24) configured to generate electric power, a vapor absorption machine (26) configured to cool a second device (28), a hot water supply unit (20), a water distillation unit (32), a water desalination unit (34), or combinations thereof.

## Description

The invention relates generally to a hybrid system, and more specifically to a hybrid system having a photovoltaic system and a device coupled to a cooling system of the photovoltaic system.

Solar energy is considered as an alternate source of energy relative to conventional forms of energy. Solar energy conversion systems are used to convert solar energy into electrical energy. The solar energy conversion system typically includes photovoltaic modules, photoelectric cells, or solar cells that convert solar energy into electrical energy for immediate use or for storage and subsequent use. Conversion of solar energy into electrical energy includes reception of light, such as sunlight, at a solar cell, absorption of sunlight into the solar cell, generation and separation of positive and negative charges creating a voltage in the solar cell, and collection and transfer of electrical charges through a terminal coupled to the solar cell.

Solar modules are primarily used in residential and commercial areas i.e. in areas served by a grid of an electric utility company. The amount of electrical energy generated by the solar module is directly related to the amount of solar energy the cells within a module absorb, which in turn is impacted by the cell efficiency, surface area of cell coverage, and the intensity or brightness of the sunlight that is incident on the cells. Cost of a photovoltaic module increases with increased surface area coverage by the photovoltaic cells. One approach for reducing the cost associated with photovoltaic modules is via optical concentration techniques. By employing optical concentration, the cell coverage area within the laminate is reduced.

The concentrated photovoltaic modules with higher efficiency photovoltaic cells can achieve higher power densities than non-concentrated silicon modules by focusing sunlight to the photovoltaic modules using optical concentration techniques. In other words, higher concentration of sunlight together with the high efficiency photovoltaic cells leads to higher power density. However, increased solar energy concentration leads to heating of the photovoltaic module, resulting in increase of temperature of the photovoltaic material. The increase in temperature of the photovoltaic module decreases efficiency of the photovoltaic module, leading to reduced performance of the photovoltaic module. As a result, effective power generated from the photovoltaic module is limited.

There is a need for an improved system that overcomes the drawbacks discussed herein.

In accordance with one exemplary embodiment of the present invention, a hybrid system is disclosed. The hybrid system includes a photovoltaic system configured to receive solar energy and convert the solar energy into electrical energy. A cooling system is coupled to the photovoltaic system and configured to circulate a cooling fluid through the cooling system so as to remove heat from the photovoltaic system to cool the photovoltaic system. A first device is coupled to the cooling system and configured to receive the heated cooling fluid from the cooling system. The first device includes a waste heat recovery system configured to generate electric power, a vapor absorption machine configured to cool a second device, a hot water supply unit, a water distillation unit, a water desalination unit, or combinations thereof.

In accordance with another exemplary embodiment of the present invention, a method of operation of the hybrid system is disclosed.

Various features, aspects, and advantages of the present invention will become better understood when the following detailed description is read with reference to the accompanying drawings in which like characters represent like parts throughout the drawings, wherein:
FIG. 1 is a diagrammatical representation of a hybrid system in accordance with an exemplary embodiment of the present invention;
FIG. 2 is a schematic representation of a hybrid system having a cooling system in accordance with an exemplary embodiment of the present invention;
FIG. 3 is a diagrammatical representation of a hybrid system having a waste heat recovery system combined with a photovoltaic system in accordance with an exemplary embodiment of the present invention;
FIG. 4 is a diagrammatical representation of a hybrid system having waste heat recovery system coupled to a cooling system of a photovoltaic system via a thermal oil loop in accordance with an exemplary embodiment of the present invention;
FIG. 5 is a graphical representation illustrating variation in electrical power generated by the hybrid system versus temperature in accordance with an exemplary embodiment of the present invention;
FIG. 6 is a graphical representation illustrating variation in effective electric efficiency of the hybrid system versus temperature in accordance with an exemplary embodiment of the present invention;
FIG. 7 is a graphical representation illustrating in electric power of the hybrid system versus temperature in accordance with an exemplary embodiment of the present invention; and
FIG. 8 is a graphical representation illustrating in combined electric efficiency of the hybrid system versus temperature in accordance with an exemplary embodiment of the present invention.

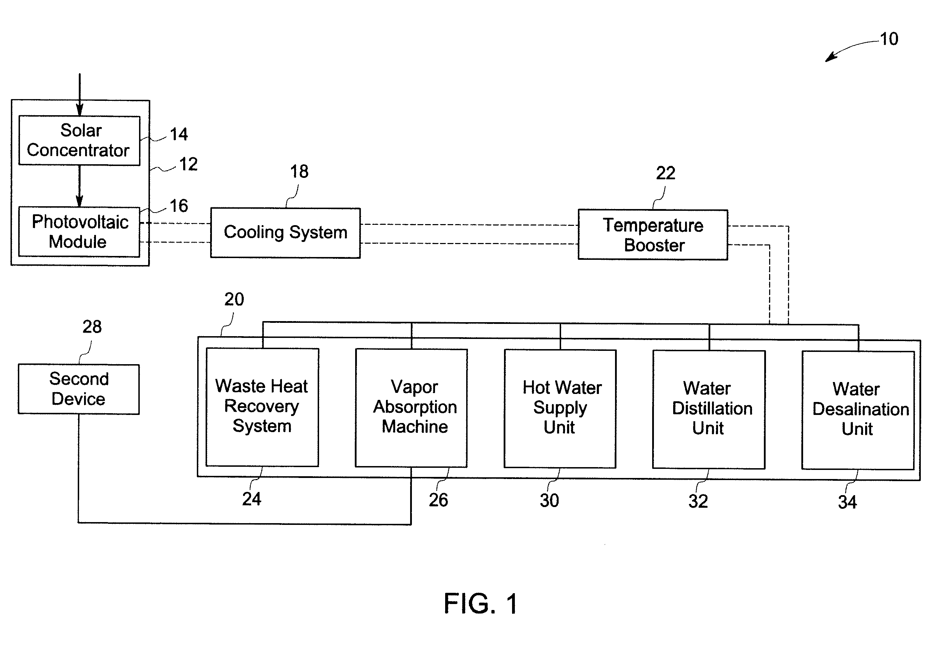

As discussed herein below with reference to embodiments of FIGS. 1-8, a hybrid system is disclosed. The hybrid system includes a photovoltaic system configured to receive solar energy and convert the solar energy into electrical energy. A cooling system is coupled to the photovoltaic system and configured to circulate a cooling fluid through the cooling system so as to remove heat from the photovoltaic system to cool the photovoltaic system. A first device is coupled to the cooling system and configured to receive the heated cooling fluid from the cooling system. The first device includes a waste heat recovery system configured to generate electric power, a vapor absorption machine configured to cool a second device, a hot water supply unit, a water distillation unit, a water desalination unit, or combinations thereof. In accordance with another embodiment of the present invention, a method for operation of a hybrid system is disclosed. The efficiency of the exemplary photovoltaic system is substantially increased leading to increased performance of the photovoltaic module.

Referring to FIG. 1, a block diagram of a hybrid system 10 is disclosed. The hybrid system 10 includes a photovoltaic system 12 having a solar concentrator 14 configured to receive solar energy and further configured to concentrate and guide the solar energy to a photovoltaic module 16. The solar concentrator 14 is configured to accept light rays from a broad range of incident flux angles with minimal degradation in performance. The solar energy incident on the photovoltaic module 16 is directly transmitted through the above-mentioned solar concentrator 14 or is transmitted by total internal reflection through the solar concentrator 14 or a combination thereof. The solar concentrator 14 may include refractive concentrators, reflective concentrators, or combinations thereof. The photovoltaic module 16 may include a plurality of photovoltaic cells coupled electrically and may also be embedded in a protective encapsulant (not shown). The protective encapsulant is configured to provide strength to the photovoltaic cells and also to protect the photovoltaic cells from extreme ambient conditions.

The photovoltaic module 16 can achieve higher power densities by focusing sunlight to the photovoltaic module 16 using the solar concentrator 14. In other words, higher concentration of sunlight leads to higher power density. However, increased solar energy concentration leads to heating of the photovoltaic module 16, resulting in increase of temperature of the photovoltaic material. An active cooling system 18 is coupled to the photovoltaic module 16 and configured to circulate a cooling fluid through the cooling system 18 so as to remove heat from the photovoltaic module 16 to cool the photovoltaic module 16. In one embodiment, the cooling fluid includes water. In another embodiment, the cooling fluid includes water mixed with glycol. In certain other embodiments, cooling fluid may include oil or gas.

A first device 20 is coupled to the cooling system 18 via a temperature booster 22, for example, a solar vacuum tube collector. The first device 20 is configured to receive the heated cooling fluid from the cooling system 18 via the temperature booster 22. In one embodiment, the first device 20 includes a waste heat recovery system 24 configured to generate electric power. The waste heat recovery system 24 is configured to remove heat from the heated cooling fluid and generate electric power. In another embodiment, the first device 20 includes a vapor absorption machine 26 configured to remove heat from the cooling fluid and cool a second device 28. The second device 28 may be any application having cooling requirements. In yet another embodiment, the first device 20 includes a hot water supply unit 30. In yet another embodiment, the first device 20 includes a water distillation unit 32 configured to remove heat from the cooling fluid and distill water. In yet another embodiment, the first device 20 includes a water desalination unit 34 configured to remove heat from the cooling fluid and desalinate water. In certain embodiments, the first device 20 includes a combinations thereof of the devices discussed herein.

The temperature booster 22 is configured to substantially increase the temperature of the heated cooling fluid fed from the cooling system 18 to the first device 20 from a first temperature (for example, 70 degrees Celsius) to a second temperature (for example, 110 degrees Celsius). Conventionally, a photovoltaic system is cooled to a relatively low temperature, for example 70 degrees Celsius. However, a cooling fluid at such a lower temperature may not offer other application possibilities. In the illustrated embodiment, the usage of solar booster 22 facilitates to operate the photovoltaic system 12 at low temperature and also boost the temperature of the cooling fluid required for other application possibilities.

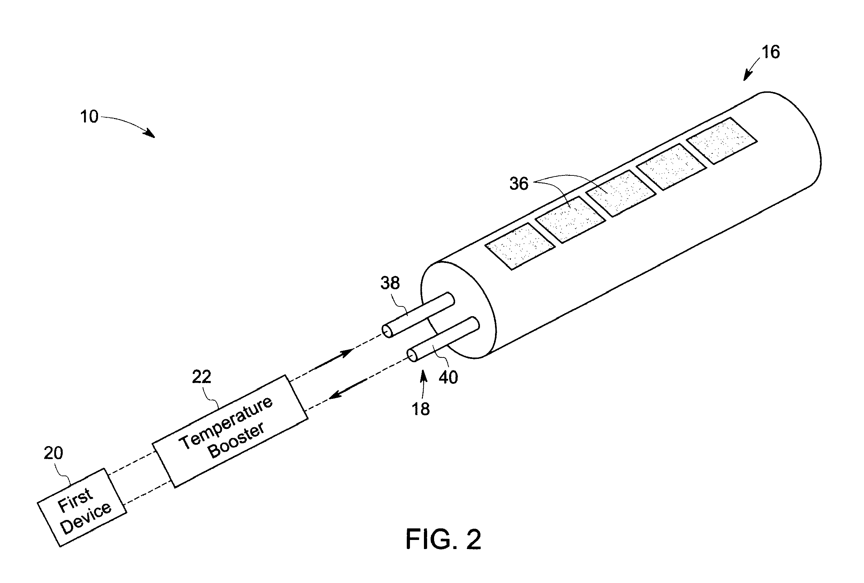

Referring to FIG. 2, a schematic representation of the hybrid system 10 is disclosed. In the illustrated embodiment, the photovoltaic module 16 includes a plurality of photovoltaic cells 36 coupled to each other electrically. As discussed previously, the active cooling system 18 is coupled to the photovoltaic module 16 and configured to circulate the cooling fluid through the cooling system 18 so as to remove heat from the photovoltaic module 16 to cool the photovoltaic module 16. In the illustrated embodiment, the cooling system 18 includes an inlet 38 for feeding in the cooling fluid and an outlet for feeding out the cooling fluid. It should be noted herein that the configuration of the cooling system 18 is an exemplary embodiment and should not be construed as limiting. Again as discussed above, the first device 20 is coupled to the cooling system 18 via the temperature booster 22. The first device 20 is configured to receive the heated cooling fluid from the cooling system 18 via the temperature booster 22.

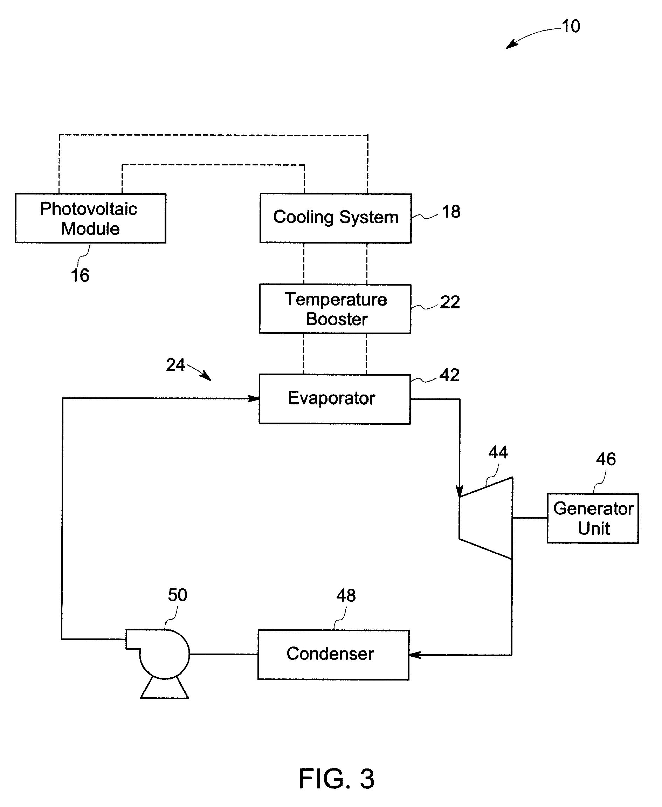

Referring to FIG. 3, a schematic representation of the hybrid system 10 is disclosed. The active cooling system 18 is coupled to the photovoltaic module 16 and configured to circulate the cooling fluid through the cooling system 18 so as to remove heat from the photovoltaic module 16 to cool the photovoltaic module 16. The first device 20 is coupled to the cooling system 18 via the temperature booster 22.

In the illustrated embodiment, the first device 20 includes the waste heat recovery system 24 in accordance with an exemplary embodiment of the present invention. The illustrated waste heat recovery system 24 is an organic rankine cycle system. It should be noted herein that the waste heat recovery system 24 may be alternatively referred to as the organic rankine cycle system. An organic working fluid is circulated through the organic rankine cycle system 24. The organic working fluid may include cyclohexane, cyclopentane, thiophene, ketones, aromatics, or combinations thereof. The organic rankine cycle system 24 includes an evaporator 42 coupled to the temperature booster 22. The evaporator 42 receives heat from the heated cooling fluid and generates an organic working fluid vapor. The organic working fluid vapor is passed through an expander 44 (which in one example comprises a radial type expander) to drive a generator unit 46 for generating electric power. In certain other exemplary embodiments, the expander 44 may be axial type expander, impulse type expander, or high temperature screw type expander. After passing through the expander 44, the organic working fluid vapor at a relatively lower pressure and lower temperature is passed through a condenser 48. The organic working fluid vapor is condensed into a liquid, which is then pumped via a pump 50 to the evaporator 42. The cycle may then be repeated.

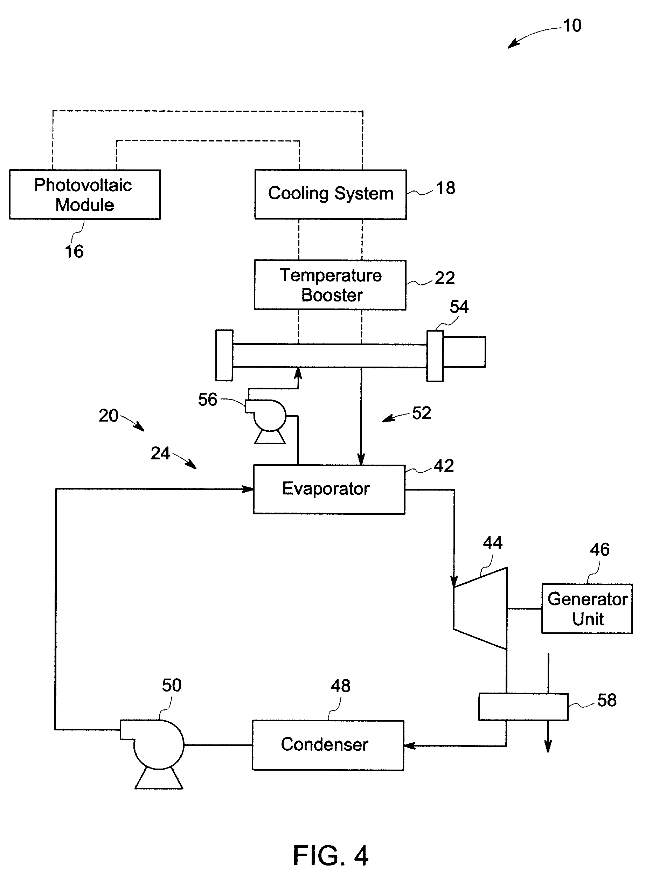

Referring to FIG. 4, a schematic representation of the hybrid system 10 is disclosed. As discussed above, the illustrated waste heat recovery system 24 includes the organic rankine cycle system. In the illustrated embodiment, the organic rankine cycle system 24 includes the evaporator 42 coupled to the temperature booster 22 via a thermal oil loop 52. Specifically, the evaporator 42 is coupled to the temperature booster 22 via a thermal oil heat exchanger 54. In the illustrated embodiment, the thermal oil heat exchanger 54 is a shell and tube type heat exchanger. The thermal oil heat exchanger 54 is used to heat thermal oil to a relatively higher temperature using the heated cooling fluid. The evaporator 42 receives heat from the thermal oil and generates the organic working fluid vapor. The thermal oil is then pumped back from the evaporator 42 to the thermal oil heat exchanger 54 using a pump 56.

Also, in the illustrated embodiment, a heat exchanger 58 is disposed between the expander 44 and the condenser 48 exchanger configured to remove heat from the expanded vaporized working fluid and heat water. The hot water may be used for various hot water supply requirements. With reference to embodiments discussed above, the hybrid system 10 has a thermodynamic cycle coupled to a photovoltaic system to extract electric power from thermal energy. Therefore, the power density from the photovoltaic system 12 can be increased substantially by converting the solar energy to electricity using photovoltaic conversion and converting the excess heat to electrical power using a thermodynamic cycle for waste heat recovery instead of dissipating to the environment. The addition of the thermodynamic cycle for waste heat recovery facilitates cooling of the photovoltaic system 12 and generating additional carbon-dioxide-free electricity.

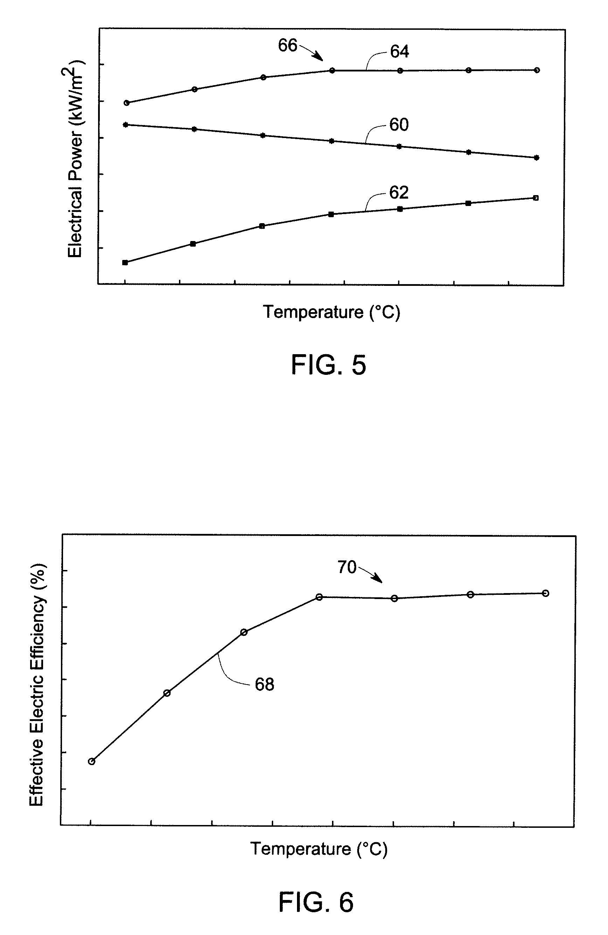

Referring to FIG. 5, a graphical representation of electrical power (expressed in kW/m²) versus temperature (expressed in degrees Celsius) is illustrated. A curve 60 represents variation in power generated by the photovoltaic system with respect to temperature. A curve 62 represents variation in power generated by the waste heat recovery system with respect to temperature. A curve 64 represents variation in combined power output from the exemplary hybrid system with respect to temperature. The curve 60 indicates that the power output from the photovoltaic system decreases with increase in temperature. The curve 62 indicates that the power output from the waste heat recovery system increases with increase in temperature. The curve 64 indicates that the combined power output from the hybrid system increases with respect to temperature up to a predetermined temperature point 66 and is then saturated as the temperature increases beyond the temperature point 66. The power output from the hybrid system is saturated beyond the temperature point 66 as the increase in power output from the waste heat recovery system compensates the decrease in power output from the photovoltaic system.

Referring to FIG. 6, a graphical representation of effective electric efficiency of the hybrid system (expressed in percentage) versus temperature (expressed in degrees Celsius) is illustrated. A curve 68 represents variation in effective electric efficiency with respect to temperature. The curve 68 indicates that the effective electric efficiency of the hybrid system increases upto a predetermined temperature point 70 and then gets saturated beyond the predetermined temperature point 70.

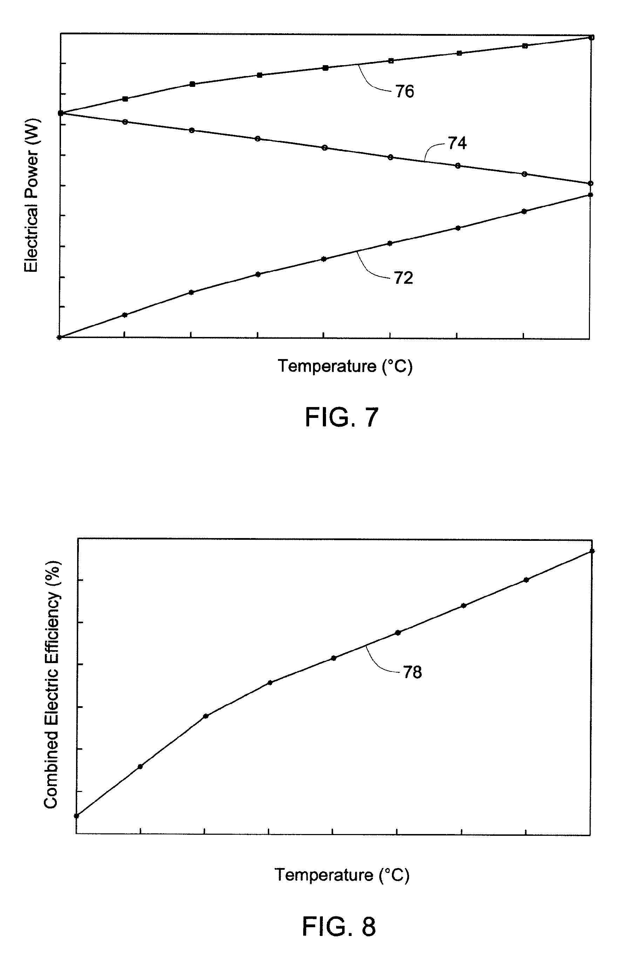

Referring to FIG. 7, a graphical representation of electric power of the hybrid system (expressed in watts) versus temperature (expresses in degrees Celsius) is illustrated. A curve 72 represents variation in electric power output from the waste heat recovery system with respect to temperature. A curve 74 represents variation in electric power output from the photovoltaic system with respect to temperature. A curve 76 represents variation in combined electric power output from the hybrid system with respect to temperature.

As discussed above, the power output from the photovoltaic system decreases with increase in temperature. The power output from the waste heat recovery system increases with increase in temperature. The combined power output from the hybrid system increases with respect to temperature. In certain embodiments, the hybrid system may have a power density of 700 watts per meter squared.

Referring to FIG. 8, a graphical representation of combined electric efficiency of the hybrid system (expressed in percentage) versus temperature (expresses in degrees Celsius) is illustrated. The curve 78 indicates that the effective efficiency of the hybrid system increases with increase in temperature.

The embodiments of FIGS. 2-8, specifically discuss the combination of photovoltaic system and the waste heat recovery system. Referring again to FIG. 1, in one embodiment, the photovoltaic system 12 is combined with the vapor absorption machine 26. In such an embodiment, the vapor absorption machine 26 is a heated cooling fluid driven vapor absorption machine 26. For example, the vapor absorption machine 26 may be driven using hot water fed through the temperature booster 22. The machine 26 is used for cooling or air conditioning of the second device 28. In another embodiment, the photovoltaic system 12 is combined with the hot water supply unit 30. The supply unit 30 is configured to feed the hot water fed through the temperature booster 22. In yet another embodiment, the photovoltaic system 12 is combined with the water distillation unit 32. In such an embodiment, the distillation unit 32 is used to remove thermal energy from the heated cooling fluid fed through the booster 22 and distill water. In yet another embodiment, the photovoltaic system 12 is combined with the water desalination unit 34. In such an embodiment, the desalination unit 34 is used to remove thermal energy from the heated cooling fluid fed through the booster 22 and desalinate water.

The waste heat recovery system 24, the vapor absorption machine 26, the hot water supply unit 30, the water distillation unit 32, and the water desalination unit 34 are selectively activated and deactivated based on a plurality of parameters temperature and pressure of the cooling fluid, solar irradiance on the photovoltaic system 12, efficiency of the waste heat recovery system 24 versus temperature of a working fluid distributed through the waste heat recovery system 24, coefficient of performance of the vapor absorption machine 26 versus temperature of a fluid circulated through the vapor absorption machine 26, cost of electric power, cooling load of the photovoltaic system 12, requirement of hot water through the hot water supply unit 30, cost of thermal energy of the heated cooling fluid, or combinations thereof. A control system (not shown) embedded with a decision making algorithm may be used to determine whether the thermal energy or heat of the cooling fluid may be used for electricity generation, hot water, cooling purpose, or the like. The algorithm is used to determine the optimal use of the thermal energy of the cooling fluid based on the plurality of parameters mentioned above. With reference to the embodiments discussed above, the hybrid system 10 provides substantially higher power density, lower cost per unit of power, multi-power generation i.e. electricity, heat, cooling purposes.

While only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the present invention are defined by the following numbered clauses:
1. A hybrid system, comprising:
   a photovoltaic system configured to receive solar energy and convert the solar energy into electrical energy;
   a cooling system coupled to the photovoltaic system and configured to circulate a cooling fluid through the cooling system so as to remove heat from the photovoltaic system to cool the photovoltaic system; and
   a first device coupled to the cooling system and configured to receive the heated cooling fluid from the cooling system; wherein the first device comprises a waste heat recovery system configured to generate electric power, a vapor absorption machine configured to cool a second device, a hot water supply unit, a water distillation unit, a water desalination unit, or combinations thereof.
2. The hybrid system of clause 1, further comprising a temperature booster disposed between the cooling system and the first device and configured to substantially increase the temperature of the heated cooling fluid fed from the cooling system to the first device from a first temperature to a second temperature.
3. The hybrid system of any preceding clause, wherein the waste heat recovery system comprises a rankine cycle system configured to circulate an organic working fluid.
4. The hybrid system of any preceding clause, wherein the rankine cycle system further comprises an evaporator configured to remove heat from the heated cooling fluid and vaporize the organic working fluid.
5. The hybrid system of any preceding clause, wherein the rankine cycle system further comprises a thermal oil loop, wherein the evaporator is configured to remove heat from the heated cooling fluid and vaporize the organic working fluid via the thermal oil loop.
6. The hybrid system of any preceding clause, wherein the rankine cycle system further comprises an expander configured to expand the vaporized organic working fluid.
7. The hybrid system of any preceding clause, wherein the expander comprises a screw type expander.
8. The hybrid system of any preceding clause, wherein the rankine cycle system further comprises a generator coupled to the expander and configured to generate power.
9. The hybrid system of any preceding clause, wherein the rankine cycle system further comprises a heat exchanger configured to remove heat from the expanded vaporized working fluid and heat water.
10. The hybrid system of any preceding clause, wherein the rankine cycle system further comprises a condenser configured to condense the expanded vaporized working fluid from the expander.
11. The hybrid system of any preceding clause, wherein the rankine cycle system further comprises a pump configured to feed the condensed working fluid to the evaporator.
12. The hybrid system of any preceding clause, wherein the cooling fluid comprises water or water mixed with glycol.
13. The hybrid system of any preceding clause, wherein the hot water supply unit is configured to feed the hot water from the cooling system.
14. The hybrid system of any preceding clause, wherein the vapor absorption machine is configured to remove heat from the cooling fluid of the cooling system and cool the second device.
15. The hybrid system of any preceding clause, wherein the water distillation unit is configured to remove heat from the cooling fluid of the cooling system and generate distilled water.
16. The hybrid system of any preceding clause, wherein the water desalination unit is configured to remove heat from the cooling fluid of the cooling system and generate desalinated water.
17. The hybrid system of c any preceding clause, wherein the waste heat recovery system, the vapor absorption machine, the hot water supply unit, the water distillation unit, and the water desalination unit are selectively activated and deactivated based on a plurality of parameters comprising temperature and pressure of the cooling fluid, solar irradiance on the photovoltaic system, efficiency of the waste heat recovery system versus temperature of a working fluid distributed through the waste heat recovery system, coefficient of performance of the vapor absorption machine versus temperature of a fluid circulated through the vapor absorption machine, cost of electric power, cooling load of the photovoltaic system, requirement of hot water through the hot water supply unit, cost of thermal energy of the heated cooling fluid, or combinations thereof.
18. The hybrid system of any preceding clause, further comprising a solar concentrator configured to concentrate the solar energy on the photovoltaic system.
19. The hybrid system of any preceding clause, wherein the hybrid system has a power density of 700 watts per meter squared.
20. A method, comprising:
   receiving solar energy and converting the solar energy into electrical energy via a photovoltaic system;
   removing heat from the photovoltaic system to cool the photovoltaic system via a cooling system by circulating a cooling fluid through the cooling system; and
   feeding the heated cooling fluid from the cooling system to a first device for generating electric power, cooling a second device, supplying hot water, distillation of water, desalination of water, or combinations thereof.
21. The method of any preceding clause, further comprising substantially increasing the temperature of the heated cooling fluid fed from the cooling system to the first device from a first temperature to a second temperature via a temperature booster disposed between the cooling system and the first device.
22. The method of any preceding clause, comprising feeding the heated cooling fluid from the cooling system to a first device comprising a waste heat recovery system for generating electric power.
23. The method of any preceding clause, further comprising circulating an organic working fluid through a rankine cycle system of the waste heat recovery system.
24. The method of any preceding clause, further comprising removing heat from the heated cooling fluid and vaporizing the organic working fluid via an evaporator.
25. The method of any preceding clause, further comprising removing heat from the heated cooling fluid and vaporizing the organic working fluid via a thermal oil loop.
26. The method of any preceding clause, further comprising expanding the vaporizing organic working fluid via an expander.
27. The method of any preceding clause, further comprising generating power via power generating unit coupled to the expander.
28. The method of any preceding clause, further comprising removing heat from the expanded vaporized working fluid and heat water via a heat exchanger.
29. The method of any preceding clause, further comprising condensing the expanded vaporized working fluid via a condenser.
30. The method of any preceding clause, wherein feeding the fluid comprises feeding water or water mixed with glycol.
31. The method of any preceding clause, comprising feeding the hot water from the cooling system to the first device comprising a hot water supply unit.
32. The method of any preceding clause, comprising feeding the heated cooling fluid from the cooling system to the first device comprising a vapor absorption machine for removing heat from the cooling fluid and cool the second device.
33. The method of any preceding clause, comprising feeding the heated cooling fluid from the cooling system to the first device comprising a water desalination unit for removing heat from the cooling fluid and generate desalinated water.
34. The method of any preceding clause, comprising feeding the heated cooling fluid from the cooling system to the first device comprising a water distillation unit for removing heat from the cooling fluid and generate distilled water.
35. The method of any preceding clause, further comprising selectively activating and deactivating the first device for generating electric power, cooling the second device, supplying hot water, distillation of water, desalination of water, or combinations thereof based on a plurality of parameters temperature and pressure of the cooling fluid, solar irradiance on the photovoltaic system, efficiency of the waste heat recovery system versus temperature of a working fluid distributed through the waste heat recovery system, coefficient of performance of the vapor absorption machine versus temperature of a fluid circulated through the vapor absorption machine, cost of electric power, cooling load of the photovoltaic system, requirement of hot water through the hot water supply unit, cost of thermal energy of the heated cooling fluid, or combinations thereof.

## Claims

1. A hybrid system (10), comprising:
a photovoltaic system ( 12) configured to receive solar energy and convert the solar energy into electrical energy;
a cooling system (18) coupled to the photovoltaic system (12) and configured to circulate a cooling fluid through the cooling system (18) so as to remove heat from the photovoltaic system (12) to cool the photovoltaic system (12); and
a first device (20) coupled to the cooling system (18) and configured to receive the heated cooling fluid from the cooling system (18); wherein the first device (20) comprises a waste heat recovery system (24) configured to generate electric power, a vapor absorption machine (26) configured to cool a second device (28), a hot water supply unit (30), a water distillation unit (32), a water desalination unit (34), or combinations thereof.

2. The hybrid system (10) of claim 1, further comprising a temperature booster (22) disposed between the cooling system (18) and the first device (20) and configured to substantially increase the temperature of the heated cooling fluid fed from the cooling system (18) to the first device (20) from a first temperature to a second temperature.

3. The hybrid system (10) of any preceding claim, wherein the waste heat recovery system (24) comprises a rankine cycle system configured to circulate an organic working fluid.

4. The hybrid system (10) of any preceding claim, wherein the cooling fluid comprises water or water mixed with glycol.

5. The hybrid system (10) of any preceding claim, wherein the vapor absorption machine (26) is configured to remove heat from the cooling fluid of the cooling system (18) and cool the second device (28).

6. The hybrid system (10) of any preceding claim, wherein the water distillation unit (32) is configured to remove heat from the cooling fluid of the cooling system ( 18) and generate distilled water.

7. The hybrid system (10) of any preceding claim, wherein the water desalination unit (34) is configured to remove heat from the cooling fluid of the cooling system (18) and generate desalinated water.

8. The hybrid system (10) of any preceding claim, wherein the waste heat recovery system (24), the vapor absorption machine (26), the hot water supply unit (30), the water distillation unit (32), and the water desalination unit (34) are selectively activated and deactivated based on a plurality of parameters comprising temperature and pressure of the cooling fluid, solar irradiance on the photovoltaic system (12), efficiency of the waste heat recovery system (24) versus temperature of a working fluid distributed through the waste heat recovery system (24), coefficient of performance of the vapor absorption machine (26) versus temperature of a fluid circulated through the vapor absorption machine (26), cost of electric power, cooling load of the photovoltaic system (12), requirement of hot water through the hot water supply unit (30), cost of thermal energy of the heated cooling fluid, or combinations thereof.

9. The hybrid system (10) of any preceding claim, wherein the hybrid system (10) has a power density of 700 watts per meter squared.

10. A method, comprising:
receiving solar energy and converting the solar energy into electrical energy via a photovoltaic system (12);
removing heat from the photovoltaic system (12) to cool the photovoltaic system (12) via a cooling system (18) by circulating a cooling fluid through the cooling system (18); and
feeding the heated cooling fluid from the cooling system (18) to a first device (20) for generating electric power, cooling a second device (28), supplying hot water, distillation of water, desalination of water, or combinations thereof.
